# EUROPEAN PATENT SPECIFICATION

(11) **EP 0 796 743 B1**
(45) Date of publication and mention of the grant of the patent: **19.06.2002**
(21) Application number: 97301746.0
(22) Date of filing: 14.03.1997
(51) Int. Cl.: B41M 5/36, C08L 67/02

(54) **Flame retardant composition for laser marking**
Flammhemmende Zusammensetzung für Lasermarkierung
Composition ignifuge pour marquage par laser

(30) Priority: 20.03.1996 US 13713
(43) Date of publication of application: 24.09.1997
(73) Proprietor: GENERAL ELECTRIC COMPANY, Schenectady, NY 12345 (US)
(72) Inventor: Van Der Weele, Chris, 3245 TV Sommelsdijk (NL); Ketels, Hendrikus Hubertus T.M., 4653 DK Huybergen (NL); Van De Grampel, Hendrik T., 4611 JV Bergen op Zoom (NL)
(74) Representative: Szary, Anne Catherine, Dr.

(56) References cited:
- EP-A- 0 376 261
- EP-A- 0 485 181
- EP-A- 0 536 587
- DE-A- 4 235 302
- PATENT ABSTRACTS OF JAPAN vol. 018, no. 268 (C-1202), 23 May 1994 & JP 06 041406 A (TEIJIN LTD), 15 February 1994,
- DATABASE WPI Section Ch, Week 9126 Derwent Publications Ltd., London, GB; Class A14, AN 91-190656 XP002034215 & KR 9 003 918 B (KOLON CO) , 4 June 1990
- PATENT ABSTRACTS OF JAPAN vol. 008, no. 106 (C-223), 18 May 1984 & JP 59 020351 A (MITSUBISHI KASEI KOGYO KK), 2 February 1984,

## Description

This invention relates to a resin composition suitable for marking with a laser and a method for laser marking.

Methods for marking thermoplastic resins include the spraying of ink by ink jet processes, screen printing, and ink writing. Problems with heat impact resistance (peeling of the ink surface), weatherability (discoloration of the ink) and wear resistance (wearing of the ink surface) are generally encountered with the use of these methods.

For the above reasons, much industrial use has been made recently of laser marking methods, which are non-contact, have a rapid marking speed, are automated, and enable easy process control. Laser marking methods are processes that use laser light to place marks, bar codes or images on the surface of metal, ceramic, macromolecular organic materials or the like. One such method is described in DE-A-4235302.

Laser marking involves irradiation of the target surface with laser light. Marking is effected by utilizing changes in the surface state (toughening or forming depressions) brought about by erosion of the irradiated portion. According to one technique, the resin composition to be marked contains additives which promote the marking. U.S. Pat. 5,373,039, issued Dec. 13, 1994 to Sakai, et. al. describes the use of tetrazole compounds and also of azo compounds, nitroso compounds and sulfonylhydrazide compounds having a decomposition temperature of 210° C. Moreover, because there is no influence on areas not irradiated with laser light, these markings are very distinct. Kokoku No. 2-47,314 (1990) describes the use of foaming additives such as aliphatic hydrocarbons, their chlorinates or fluorinates, bicarbonates, or azo compounds, nitroso compounds or sulfonylhydrazide compounds having a decomposition temperature of less than about 210° C. However, the inclusion of these additives may have undesirable consequences, such as foaming during production of the resin composition or foaming even in regions not irradiated with laser light, making for indistinct marking.

In marking, it is desirable to develop resin compositions which contain ingredients which enhance the laser marking of the resin without the necessity of additional additives which might deleteriously effect other desired properties of the resin.

Hence, the object act of this invention is to provide resin compositions containing ingredients selected to enhance the laser marking of resins so distinct and secure markings can applied to the surface of molded articles.

It is an object of the present invention to provide for enhancement of the laser marking properties of a resin without necessity of special additions of foaming agents or other ingredients which might deleteriously effect the desirable final properties of the resin.

It is an object of the present invention to provide a resin composition comprising a reinforced polyester resin including a radiation sensitive flame retardant for enhancing the laser marking properties of the resin.

According to the present invention, a flame retarded resin molding composition having enhanced laser marking properties comprises
(a) a polyester selected from the group consisting of poly(ethylene terephthalate), poly(1,4-butylene terephthalate), poly(ethylene naphthalate) and poly(propylene terephthalate);
(b) a radiation sensitive poly(haloaryl acrylate) flame retardant; and
(c) a flame retardant synergist.

In the resin compositions of the present invention, the combination of ingredients are selected so that the final composition possesses desirable laser marking properties. Additional, important properties include good mechanical properties, good flame retardancy, good processability, i.e. short cycle times, and good flow. Flame retardants and glass fibers are desirably added to the polyester component to enhance the flammability and strength properties, respectively.

In accordance with the principles. of the present invention, the flame retardant is a radiation sensitive poly (haloaryl acrylate) flame retardant which desirably enhances the laser marking properties. Preferably the aromatically bound halogen is bromine. Preferably, the bromine content is greater than 50 percent by weight of the weight of the flame retardant, and more preferably greater than 70 percent by weight. Typical poly (haloaryl acrylate) flame retardants are poly(pentabromobenzyl acrylate), poly(1,2,4,5-tetrabromoxylylene diacrylate) and tetra bromo-p-xylylene diacrylate-tetrachloro-p-xylylene diacrylate copolymer, especially preferred is polypenta-bromobenzyl acrylate.

The flame retardant additive is preferably used in an amount effective to enhance the laser marking properties and reduce the flammability of molded polyester resin. The amount will vary with the nature of the resin and with the efficiency of the additive. In general, however, the amount of additive will be from 3 to 25 percent by weight based on the total weight of the composition. A preferred range will be from about 5 to 20 percent, and more preferably 7 to 15 percent based on the weight of the total composition.

The flame retardants used herein are used with a synergist, particularly inorganic or organic antimony compounds. Such compounds are widely available or can be made in known ways. In preferred embodiments, the type of antimony compound used is not critical, being a choice primarily based on economics. For example, as inorganic compounds there can be used antimony oxide (Sb2O3); antimony phosphate; KSb(OH)₆; NH₄SbF₆; SbS₃; and the like. A wide variety of organic antimony compounds can also be used, such as antimony esters with organic acids; cyclic alkyl antimonites; aryl antimonic acids and the like. Illustrative of the organic antimony compounds, including inorganic salts of such compounds, are: KSb tartrate; Sb caproate; Sb(OCH₂CH₃)₃; Sb(OCH(CH₃)CH₂CH₃)₃; Sb polymethylene glycolate; triphenyl antimony; and the like; especially preferred is antimony oxide. Synergists, e.g., antimony oxide, will be used at about 0.5 to 15 percent from 2 to 5 percent by weight based on the weight percent of resin in the final composition.

The polyesters used in the present invention are poly(ethylene terephthalate), i.e., ("PET"), and poly(1,4-butylene terephthalate), i.e., ("PBT"), also PEN, and PPT (polypropylene terephthalate).

Also contemplated herein are the above polyesters with minor amounts, e.g., from about 0.5 to about 5 percent by weight, of units derived from aliphatic acid and/or aliphatic polyols to form copolyesters. The aliphatic polyols include glycols, such as poly(ethylene glycol). Such polyesters can be made following the teachings of, for example, U.S. Pat. Nos. 2,465,319 and 3,047,539.

The preferred poly(1,4-butylene terephthalate) resin used in this invention is one obtained by polymerizing a glycol component at least 70 mol %, preferably at least 80 mol %, of which consists of tetramethylene glycol and an acid component at least 70 mol %, preferably at least 80 mol %, of which consists of terephthalic acid, and polyester-forming derivatives.

The glycol component can contain not more than 30 mol %, preferably not more than 20 mol %, of another glycol, such as ethylene glycol, trimethylene glycol, 2-methyl-1,3-propane glycol, hexamethylene glycol, decamethylene glycol, cyclohexane dimethanol, or neopentylene glycol.

The acid component can contain not more than 30 mol %, preferably not more than 20 mol %, of another acid such as isophthalic acid, 2,6-naphthalenedicarboxylic acid, 2,7-naphthalenedicarboxylic acid, 1,5-naphthalenedicarboxylic acid, 4,4'-diphenyldicarboxylic acid, 4,4'-diphenoxyethandicarboxylic acid, p-hydroxy benzoic acid, sebacic acid, adipic acid and polyester-forming derivatives thereof.

The polyesters used herein have an intrinsic viscosity of from about 0.4 to about 2.0 dl/g as measured in a 60:40 phenol/ tetrachloroethane mixture or similar solvent at 23°-30° C. VALOX Registered TM 315 polyester is particularly suitable for this invention. Preferably, it has the intrinsic viscosity is 0.3 to 1.5 dl/g.

Blends of polyesters may also be employed in the composition. As indicated earlier, preferred polyesters are poly(ethylene terephthalate) and poly(1,4-butylene terephthalate). When blends of these preferred components are employed the polyester resin component can comprise from about 1 to about 99 parts by weight poly(ethylene terephthalate) and from about 99 to about 1 part by weight poly(1,4-butylene terephthalate) based on 100 parts by weight of both components combined.

Additives are preferably utilized with the resin composition of this invention within a range that does not interfere with the object of this invention. Examples include inorganic or organic fillers such as glass, silica and talc, as well as conventional additives such as plasticizers, lubricants, heat stabilizers, weather stabilizers, antistatic agents, slip agents, anti-blocking agents, antifogging agents, pigments, dyes, natural oils, synthetic oils and waxes.

Insulating or low heat conductive fillers and reinforcing agents are typically added. Typical mineral reinforcing agents include talc, barium sulfate, magnesium carbonate, calcium carbonate (hydrated), clay, mica, silicates, kaolin, mica, metal oxides and hydroxides, combinations thereof. The preferred mineral reinforcing agents are talc, barium sulfate, and clay. Clay is a hydrated aluminum silicate generalized by the formula Al₂O₃SiO₂·xH₂O. Glass fibers are a preferred filler. As subsequently, discussed, good results have been obtained with a carbon dioxide laser using a 30% glass filled grade and with a YAG laser using talc in an unfilled PBT grade. Conductive type fillers such as carbon black and graphite should be avoided.

Glass fiber reinforcing agents increase the strength of molded resin. The glass fiber or filamentous glass is desirable employed as reinforcement in the present compositions. For compositions ultimately to be employed for electrical uses, it is preferred to use fibrous glass filaments comprised of lime-aluminum borosilicate glass that is relatively soda-free. This is known as "E" glass. However, other glasses are useful where electrical properties are not so important, e.g., the low soda glass known as "C" glass. The filaments are made by standard processes, e.g., by steam or air blowing, flame blowing and mechanical pulling. The preferred filaments for plastic reinforcement are made by mechanical pulling. The filament diameters range from about 0.00012 to 0.00075 inch but this is not critical to the present invention.

The length of the glass filaments and whether or not they are bundled into fibers and the fibers bundled in turn to yarns, ropes or rovings, or woven into mats and the like are also not critical to the invention. However, in preparing the molding compositions it is convenient to use the filamentous glass in the form of chopped strands of from about 1/8 " to about 2" long. In articles molded from the compositions on the other hand, even shorter lengths will be encountered because, during compounding considerable fragmentation will occur. This is desirable, however, because the best properties are exhibited by thermoplastic injection molded articles in which the filament lengths lie between about 0.000005" and 0.125 (1/8").

In general, fillers comprise from about 5 to about 50% by weight based on the combined weight of filler and resin, and preferably from about 10 to about 30% by weight. It is especially preferred that the filler comprise from about 15 to about 25% by weight based on the combined weight of filler and resin.

The method of blending the compositions of this invention is not critical and can be carried out by conventional techniques. One convenient method comprises blending the polyester and other ingredients in powder or granular form, extruding the blend and comminuting into pellets or other suitable shapes.

The ingredients are combined in any usual manner, e.g., by dry mixing or by mixing in the melted state in an extruder, on a heated mill or in other mixers.

By way of illustration, chopped glass (glass rovings which have been chopped into small pieces, e.g. 1/8 to 1 inch in length, and preferably less than ¼ inch in length) is put into an extrusion compounder with the polkyester resin, other ingredients, and optionally, other additive(s) to produce molding pellets. The fibers are shortened and predispersed in the process, coming out at less than 1/16 inch long. In another procedure, glass filaments are ground or milled to short lengths, and are mixed with the polyester resin and stabilizers, and, optionally other additive(s), by dry blending then either fluxed or a mill and ground, or they are extruded and chopped. The glass fibers can also be mixed with resin and additives and directly molded, e.g. by injection or transfer molding techniques.

Other ingredients typically employed in amounts less than 10 percent by weight of the total composition, preferably less than 5 percent by weight. Such additional ingredients include anti-dripping agents, lubricants, heat stabilizers, and other additives to enhance the properties of the resin. Typically, the transesterification inhibitors are used in amounts from 0.01 percent to 0.5 percent by weight and include monozinc phosphate, zinc phosphate, or other type inhibitor. Conventional stabilizer additives may be preferably utilized in amounts from 0.01 to 5 percent by weight of the total composition and include the hindered phenols and antioxidants such as the following:
1.1 Alkylated monophenols, for example: 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(alpha-methylcyclohexyl)-4,6 dimethylphenol, 2,6-di-octadecyl-4-methylphenol, 2,4,6,-tricyclohexyphenol, 2,6-di-tert-butyl-4-methoxymethylphenol.
1.2 Alkylated hydroquinones, for example, 2,6-di-tert-butyl-4-methoxyphenol, 2,5-di-tert-butyl-hydroquinone, 2,5-di-tert-amyl-hydroquinone, 2,6-Biphenyl-4octadecyloxyphenol.
1.3 Hydroxylated thiodiphenyl ethers, for example, 2,2'-thio-bis-(6-tert-butyl-4-methylphenol), 2,2'-thio-bis-(4-octylphenol), 4,4'thio-bis-(6-tert-butyl-3-methylphenol), 4,4'-thio-bis-(6-tert-butyl-2-methylphenol).
1.4 Alkylidene-bisphenols, Benzyl compounds, Acylaminophenols,

It is always important to thoroughly free all of the ingredients, the polyester resin and other ingredients from as much water as possible.

Although it is not essential, best results are obtained if the ingredients are precompounded, pelletized and then molded. Precompounding can be carried out in conventional equipment. For example, after carefully predrying the polyester resin, other ingredients, and, optionally, other additives and/or reinforcements, a single screw extruder is fed with a dry blend of the composition, the screw employed having a long transition section to insure proper melting. On the other hand, a twin screw extrusion machine e.g., a Werner Pfleiderer machine can be fed with resins and additives at the feed port and reinforcement down stream. In either case, a generally suitable machine temperature will be about 450° to 575° F.

The precompounded composition can be extruded and cut or chopped into molding compounds, such as conventional granules, pellets, etc. by standard techniques.

The compositions can be molded in any equipment conventionally used for thermoplastic compositions. For example, good results will be obtained in an injection molding machine, e.g. of the Engel type, at conventional temperatures, e.g., 240 to 260 degrees Centigrade. If necessary, depending on the molding properties of the polyester, the amount of additives and/or reinforcing filler and the rate of crystallization of the polyester component, those skilled in the art will be able to make the conventional adjustments in molding cycles to accommodate the composition.

Laser marking can be carried out by any technique on the resin compositions of the present invention. For example, a carbon dioxide gas laser or a yttrium aluminum garnet (YAG) laser can be used, although the possibilities are not limited to these alone. Distinct marking can be carried out by irradiating laser light onto the resin compositions of the present invention. It is theorized that, during laser marking, foaming at the surface in irradiated areas is caused by cleavage of poly(haloaryl acrylate) flame retardant to produce carbon dioxide. As a result, it is possible, for example, to draw a fine line having a width of about 10 um. In addition, marking can be rapidly carried out; for instance, if this is a line having a width of about 1.0 mm, writing can be carried out at a speed of 200 mm/sec or more.

The present invention shall now be illustrated more concretely by means of the examples presented below, although it shall be understood that these examples in no way restrict the scope of the invention.

From the above description, it is apparent that, according to the present invention, compositions which contain laser marking additives and carbon black form more distinct marks by means of laser light irradiation than in the case of compositions containing just one or neither of these.

Distinct and secure marking can be carried out on the resin compositions of the present invention by means of laser irradiation.

### Examples

The formulations shown below were preblended and extruded on a Sterling Extruder at a die head temperature of 520° F. The extrudate was cooled through a water bath prior to pelletizing. Test parts were injection molded on a 3 oz. Engel molding press with a set temperature of approximately 240-260° C. The resin was dried for 3-4 hours at 120 degrees Centigrade in a forced air circulating oven prior to injection molding.

The formulation of Example 1 is particularly useful with a YAG type laser which is used at 1062 nm and 532 nm which is relatively slow. The formulation of Example 2 is particularly useful with a carbon dioxide laser marking system which is used at 10600 nm and is relatively fast.

| | Example 1 (Parts/100) | Example 2 (Parts/100) |
|---|---|---|
| | | |
| PBT 195 (Valox ® resin grade 195, General Electric Company | 40.0 | 25.0 |
| PBT 315 (Valox ® resin grade 195, General Electric Company | 40.65 | 29.95 |
| Talc M40 | 0.2 | |
| PTFE premix, 20% in PC | 1.0 | 1.0 |
| Sb2O3 masterbatch, 85% in EVA | 4.5 | 3.5 |
| FR1025P poly(pentabromobenzyl) acrylate | 13.0 | 10.0 |
| PETS (>90% esterified) | 0.3 | 0.2 |
| Monozincphosphate | 0.2 | 0.2 |
| Antioxidant 1076 | 0.15 | 0.15 |
| 10 am glass fiber | | 30.0 |
| PTFE - polytetrafluoroethylene | | |
| PC - bisphenol-A polycarbonate, General Electric Company | | |
| P(ETS) - Pentaerythritol Tetrastearate, Tradename; Glycolube P(ETS), | | |
| Supplier, Lonza Inc., USA | | |
| FR1025P - poly(pentabromobenzylacrylate). Source; Eurobrom BV. | | |

## Claims

1. A flame retardant laser marking molding composition comprising:
(a) a polyester selected from the group consisting of poly(ethylene terephthalate), poly(1,4-butylene terephthalate), poly(ethylene naphthalate) and poly(propylene terephthalate);
(b) a radiation sensitive poly(haloaryl acrylate) flame retardant; and
(c) a flame retardant synergist

2. A flame retardant laser marking molding composition according to claim 1 wherein said polyester comprises poly(1,4-butylene terephthalate).

3. A flame retardant laser marking molding composition according to claim 1 wherein the aromatically bound halogen in the poly (haloaryl acrylate) flame retardant is bromine.

4. A flame retardant laser marking molding composition according to claim 3 wherein the bromine content is greater than 50 percent by weight of the weight of the flame retardant.

5. A flame retardant laser marking molding composition according to claim 1 wherein said flame retardant is poly (bromobenzyl acrylate).

6. A flame retardant laser marking molding composition according to claim 1 wherein said flame retardant is present in an amount effective to impart desirable enhanced laser marking properties to the molded resin.

7. A flame retardant laser marking molding composition according to claim 1 wherein said flame retardant is present in an amount from 5 to 20 percent by weight based on the weight of resin.

8. A flame retardant laser marking molding composition according to claim 1 including a low heat conductive filler.

9. A flame retardant laser marking molding composition according to claim 8 wherein said filler is glass.

10. A flame retardant laser marking molding composition according to claim 1 comprising substantially no filler material.

## Patentansprüche

1. Flammhemmende, lasermarkierende Formmasse, umfassend:
(a) einen Polyester, ausgewählt aus der Gruppe bestehend aus Poly(ethylenterephthalat), Poly(1,4-butylenterephthalat), Poly(ethylennaphthalat) und Poly(propylenterephthalat),
(b) einen strahlungsempfindlichen Poly(halogenarylacrylat)-Flammhemmer und
(c) einen flammhemmenden Synergisten.

2. Flammhemmende, lasermarkierende Formmasse nach Anspruch 1, worin der Polyester Poly(1,4-butylenterephthalat) umfasst.

3. Flammhemmende, lasermarkierende Formmasse nach Anspruch 1, worin das aromatisch gebundene Halogen im Poly(halogenarylacrylat)-Flammhemmer Brom ist.

4. Flammhemmende, lasermarkierende Formmasse nach Anspruch 3, worin der Bromgehalt größer als 50 Gew.-% des Gewichtes des Flammhemmers ist.

5. Flammhemmende, lasermarkierende Formmasse nach Anspruch 1, worin der Flammhemmer Poly(brombenzylacrylat) ist.

6. Flammhemmende, lasermarkierende Formmasse nach Anspruch 1, worin der Flammhemmer in einer wirksamen Menge vorhanden ist, um dem geformten Harz erwünschte verbesserte lasermarkierende Eigenschaften zu verleihen.

7. Flammhemmende, lasermarkierende Formmasse nach Anspruch 1, worin der Flammhemmer in einer Menge von 5 bis 20 Gew.-%, bezogen auf das Gewicht des Harzes, vorhanden ist.

8. Flammhemmende, lasermarkierende Formmasse nach Anspruch 1, die einen wenig Wärme leitenden Füllstoff einschließt.

9. Flammhemmende, lasermarkierende Formmasse nach Anspruch 8, worin der Füllstoff Glas ist.

10. Flammhemmende, lasermarkierende Formmasse nach Anspruch 1, die im Wesentlichen kein Füllstoff-Material umfasst.

## Revendications

1. Composition de moulage ignifuge pour marquage par laser, comprenant
(a) un polyester choisi dans l'ensemble constitué par un poly(éthylène téréphtalate), un poly(1,4-butylène téréphtalate), un poly(éthylène naphtalate) et un poly(propylène téréphtalate) ;
(b) un agent retardateur de flamme de type poly(acrylate d'halogénoaryle) sensible au rayonnement ;
(c) un agent synergique retardateur de flamme.

2. Composition de moulage ignifuge pour marquage par laser selon la revendication 1, dans laquelle ledit polyester comprend un poly(1,4-butylène téréphtalate).

3. Composition de moulage ignifuge pour marquage par laser selon la revendication 1, dans laquelle l'halogène lié au noyau aromatique dans l'agent retardateur de flamme de type poly(acrylate d'halogénoaryle) est le brome.

4. Composition de moulage ignifuge pour marquage par laser selon la revendication 3, dans laquelle la teneur en brome représente plus de 50 % du poids de l'agent retardateur.

5. Composition de moulage ignifuge pour marquage par laser selon la revendication 1, dans laquelle ledit agent retardateur de flamme est un poly(acrylate de bromobenzyle).

6. Composition de moulage ignifuge pour marquage par laser selon la revendication 1, dans laquelle ledit agent retardateur de flamme est présent en une quantité efficace pour conférer des propriétés de marquage au laser améliorées souhaitées sur la résine moulée.

7. Composition de moulage ignifuge pour marquage par laser selon la revendication 1, dans laquelle ledit agent retardateur de flamme est présent en une quantité de 5 à 20 % en poids par rapport au poids de la résine.

8. Composition de moulage ignifuge pour marquage par laser selon la revendication 1, comprenant une charge peu thermoconductrice.

9. Composition de moulage ignifuge pour marquage par laser selon la revendication 8, dans laquelle ladite charge est un verre.

10. Composition de moulage ignifuge pour marquage par laser selon la revendication 1, ne comprenant pratiquement aucune charge.
